## Europäisches Patentamt
## European Patent Office
## Office européen des brevets

(11) Veröffentlichungsnummer: **0 164 109**
**B1**

(12) **EUROPÄISCHE PATENTSCHRIFT**

(45) Veröffentlichungstag der Patentschrift:
12.10.88

(21) Anmeldenummer: 85106959.1

(22) Anmeldetag: 05.06.85

(51) Int. Cl.⁴: **B 65 G 17/20**, B 65 G 15/04

(54) Selbsttätige Transportvorrichtung für eine Hängefördervorrichtung.

(30) Priorität: 05.06.84 DE 3420912
26.03.85 DE 3510955

(43) Veröffentlichungstag der Anmeldung:
11.12.85 Patentblatt 85/50

(45) Bekanntmachung des Hinweises auf die Patenterteilung:
12.10.88 Patentblatt 88/41

(84) Benannte Vertragsstaaten:
AT BE CH DE FR GB IT LI LU NL SE

(56) Entgegenhaltungen:
DE-A-3 214 044
DE-C-2 344 533
DE-C-3 110 833

(73) Patentinhaber: Gärtner, Franz, Mühlweg 10, D-8741
Unterelsbach (DE)

(72) Erfinder: Gärtner, Franz, Mühlweg 10, D-8741
Unterelsbach (DE)

(74) Vertreter: Patentanwälte Dr. Solf & Zapf,
Zeppelinstrasse 53, D-8000 München 80 (DE)

LIBER, STOCKHOLM 1988

## Beschreibung

Die Erfindung betrifft eine selbsttätige Transportvorrichtung für eine Hängefördervorrichtung, insbesondere für die innerbetriebliche Hängeförderung in der Bekleidungsindustrie mit Laufschienen und darauf verschiebbaren, die Laufschiene van unten umgreifenden Tragbügeln, wobei mindestens zwei Tragbügel Teile eines Tragwagens sein können, und wobei zur Abstützung auf der Laufschiene jeweils zwei zueinander schräggestellte Laufrollen an den Tragbügeln angeordnet sind und zum selbsttätigen Transportieren der Tragwagen ein endlos umlaufendes angetriebenes Zugelement vorgesehen ist, das mit an den Tragbügeln angeordneten Kupplungselementen die selbsttätige Mitnahme bewirkt.

Eine selbsttätige Transportvorrichtung für eine geneigte Förderstrecke ist aus der DE-PS-2 344 533 bekannt. Die Kupplungselemente der bekannten Transportvorrichtung für die Hängefördervorrichtung bestehen aus einer an der Laufschiene vorgesehenen Stützkante oberhalb der Kette und an den Tragbügeln unterhalb der Kette angeordneten, federnd nachgiebigen Querstegen. Der Abstand dieser Kupplungselemente ist so gewählt, daß sie im Bereich der geneigten Förderstrecke in Klemmeingriff mit der Kette gelangen. Die federnde Nachgiebigkeit eines Querstegs ist notwendig, weil das mit ihm in Eingriff gelangende Kettenglied noch etwas nach unten bewegt wird und eine Verformung des Querstegs nach unten erfordert.

Nachteilig bei der bekannten Transportvorrichtung ist, daß die elastischen Querstege nach kurzer Zeit verschlissen sind, so daß eine Mitnahme nicht mehr bewirkt werden kann. Ein weiterer Nachteil ist, daß, wenn mehrere Trageinrichtungen zu einem sogenannten Zug zusammengestellt sind, indem z. B. zwei Tragbügel mit einem Abstandstragsteg einen Tragwagen und mehrere Tragwagen gekoppelt einen Zug bilden, auf die Kupplungselemente im Übergangsbereich aus der geraden Strecke in die geneigte Strecke erhebliche Drehmomente wirken, die zum Bruch der starren Kupplungselemente führen können. Nachteilig ist ferner, daß mit der bekannten Transportvorrichtung die selbsttätige Förderung in der Ebene oder engen Kurven bzw. gekrümmten, gegebenenfalls zudem auch noch geneigten Strecken nicht gelingt, weil zum einen die Kupplungselemente nicht greifen oder außer Eingriff geraten und zum anderen die Förderkette keine Krümmung zuläßt.

Ein ähnlich nachteiliges System wird in der DE-PS-3 110 833 beschrieben, in der die oben genannten Nachteile bezüglich des Verschleisses der in der DE-PS-2 344 533 beschriebenen Vorrichtung angegeben werden. Die Kompensation dieser Nachteile wird beim Gegenstand des jüngeren Patents mit einer sehr komplizierten Kupplungsvorrichtung erkauft. Für ebene, horizontale und gekrümmte Strecken ist die im jüngeren Patent beschriebene Transportvorrichtung ebenfalls nicht geeignet. Die Kupplungselemente funktionieren nur in geneigten Strecken.

Eine selbsttätige Transportvorrichtung für ebene Strecken ist aus der DE-DS-2 915 095 bekannt. Diese Fördervorrichtung ist kompliziert aufgebaut und ein relativ teueres Element der Fördervorrichtung.

Darüber hinaus wird in der DE-OS-3 042 689 eine selbsttätige Transportvorrichtung beschrieben, die gleichermaßen horizontale und gekrümmte Strecken verwendet werden kann. Sie weist eine feingliedrige Förderkette auf, die seitlich unterhalb der Laufschienen in nach unten geschlossenen Kunststoffgleitschienen geführt ist. Die Kunststoffgleitschienen sind über Abstandsbügel an der Laufschienenhalterung befestigt. An der Förderkette sind senkrecht zur Bewegungsrichtung ausgerichtete Mitnehmerfinger angeordnet, die an den Tragbügeln angreifen sollen. Die Förderkette läuft senkrecht stehend in den Kunststoffgleitschienen im Falle der Verwendung einer Gall-Kette. Bei Verwendung einer Gliederkette sind im Querschnitt kreuzförmige Führungsbahnen in den Kunststoffgleitschienen vorgesehen. Nachteilig bei dieser Ausführungsform der Transportvorrichtung ist, daß erhebliche Drehmomente auf die Mitnehmerfinger wirken, die Mitnahme nicht stoßfrei erfolgt und außerdem die Mitnehmerfinger starr gelagert sind, wenn sie sich in der Transportstellung befinden.

Aufgabe der Erfindung ist, eine selbsttätige Transportvorrichtung zu schaffen, die einfach aufgebaut ist, sowohl in horizontalen als auch geneigten als auch gekrümmten Strecken einsetzbar ist und eine Mitnahme bewirkt, die relativ stoßfrei ist sowie von übermäßigen Drehmomenten nicht beeinträchtigt wird.

Diese Aufgabe wird bei Transportvorrichtungen mit Merkmalen gemäß den Ansprüchen 1 und 10 gelöst. Vorteilhafte Weiterbildungen der Erfindung werden in den Unteransprüchen angegeben.

Bei der Ausführungsform nach Anspruch 1 erfolgt die Mitnahme so, daß sich bei sehr starker Beanspruchung die Stifte neigen und in die Öffnung eines anderen Kettenglieds springen können. Dieses Überspringen von einem zum anderen Loch geschieht solange, bis die Stifte biegemomentfrei oder nahzu biegemomentfrei sind. Die Mitnahme erfolgt bei diesem Ausführungsbeispiel fest bzw. bei großen Biegemomenten gleitend sprunghaft.

Bei der Ausführungsform nach Anspruch 10 wird eine Kunststoffschiene verwendet, die unter der Laufschiene angeordnet ist und einen Führungskanal aufweist, der mit einem nach unten offenen Längsschlitz ausgebildet ist. Im Führungskanal wird ein angetriebener endloser Riemen formschlüssig geführt, der ebenfalls einen nach unten offenen Längsschlitz aufweist. Die Tragbügel des Tragwagens durchgreifen jeweils einen vertikal angeordneten Mitnahmesteg, der am horizontalen Tragsteg des Tragwagens sitzt. Für den klemmenden Eingriff in den Längsschlitz des Riemens sind Stifte im freien Endbereich der vertikal angeordneten Mitnahmestege vorgesehen. Diese selbsttätige Transportvorrichtung arbeitet sehr gut, wobei mit einfachen konstruktiven Mitteln erreicht wird, daß die Tragbügel unabhängig von ihrer Belastung und der Länge der Tragwagen weitgehend sanft, d. h. stufenlos gleitend, mitgenommen werden, ohne daß Kupplungsteile,wie z. B. Mitnehmerstifte, beschädigt werden. Die Mitnahme oder die Überführung eines mit Fördergut bestückten Tragbügels erfolgt vorteilhaft in einem kontinuierlichen Fluß, und das Erfassen der Tragbügel geht nach Art der Wirkung einer Rutschkupplung vor sich.

Erfindungsgemäß werden auch Tragbügel mit Trageinrichtungen vorteilhaft selbsttätig transportiert.

Die vorliegende Erfindung wird anhand der Zeichnung beispielhaft näher erläutert. Es zeigen:

Fig. 1 schematisch teilweise im Schnitt die wesentlichsten Teile einer erfindungsgemäßen Transportvorrichtung,

Fig. 2 schematisch die Problemzone einer selbsttätigen Transportvorrichtung mit geneigter Strecke,

Fig. 3 einen Tragwagen,

Fig. 4 und 5 ein weiteres Ausführungsbeispiel der Kupplungselemente,

Fig. 6 eine andere Ausführungsform der Kette,

Fig. 7 ein anderes Ausführungsbeispiel der erfindungsgemäßen Transportvorrichtung, und

Fig. 8 und 9 zwei weitere Ausführungsbeispiele der erfindungsgemäßen Transportvorrichtung.

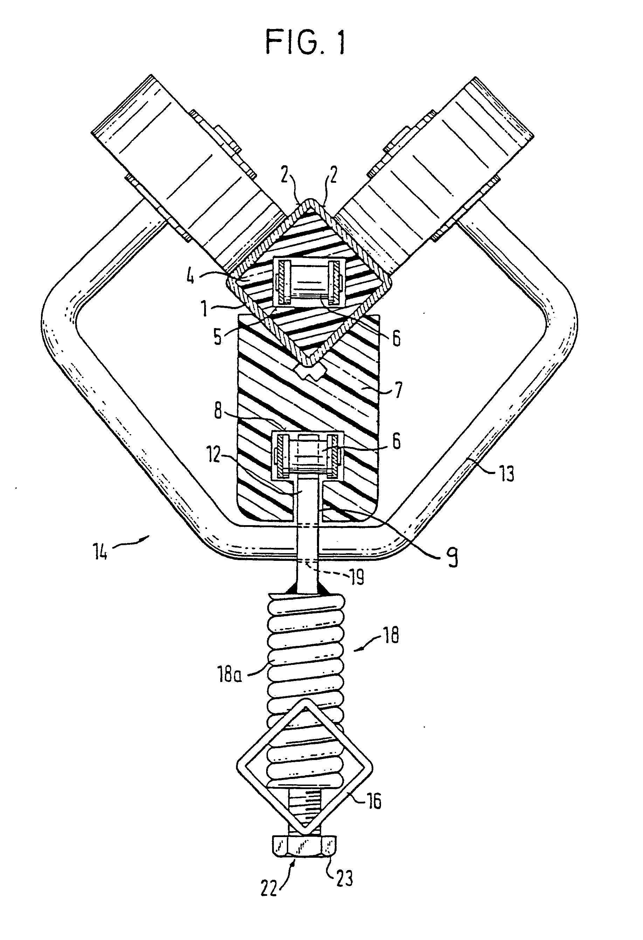

Die Abbildung in Fig. 1 zeigt die Tragschiene 1 mit den zueinander dachförmig gewinkelten Laufflächen 2. Die Tragschiene 1 besteht aus einem Vierkantrohr; sie kann aber auch lediglich ein Winkelprofil sein. Das Vierkantrohr ist mit Kunststoff 4 ausgefüllt. Im Kunststoff befindet sich ein Längskanal 5. Im Kanal 5 wird formschlüssig der obere Trum der Kette 6 geführt. Dargestellt ist eine Gallkette. Wenn eine Gliederkette benutzt werden soll, ist die Querschnittsform des Kanals 5 entsprechend ausgebildet. Anstelle der Auskleidung des Vierkantrohrs mit Kunststoff und der Führung der Kette in dem Kanal 5 kann vorgesehen sein, die Kette mit entsprechenden Führungsmitteln oder ohne Führungsmittel oberhalb der Tragschiene 1 zurückzuführen.

Unterhalb der Tragschiene 1 sitzt befestigt eine Kunststoffschiene 7. In die Kunststoffschiene 7 ist ein Längskanal 8 eingebracht, der einen nach unten offenen Längsschlitz 9 aufweist. Im Längskanal 8 wird formschlüssig der untere Trum der Kette 6 geführt. Ist eine Gliederkette vorgesehen, ist die Querschnittsform des Kanals 8 wie beim Kanal 6 zur formschlüssigen Führung entsprechend ausgebildet.

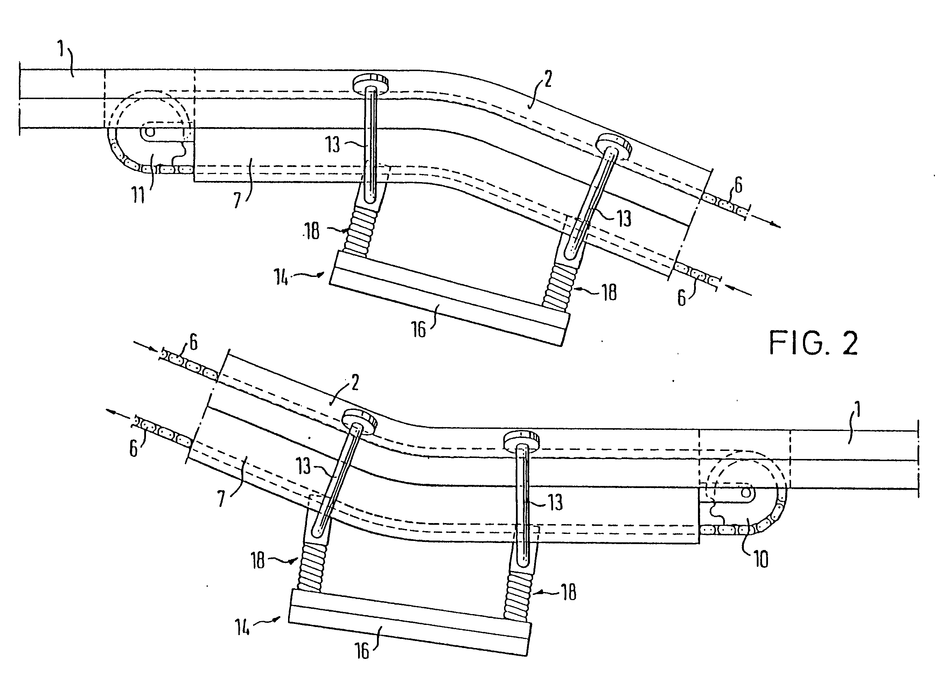

Der Verlauf der Kette 6 ergibt sich aus Fig. 2. Die Kette läuft über das angetriebene Kettenrad 10 und das Kettenrad 11, die sich jeweils frontal vor der Kunststoffschiene 7 befinden. Die Kettenräder 10 und 11 sind in an sich bekannter Weise in entsprechenden, in der Laufschiene 1 angeordneten Schlitzen gelagert, so daß die Trume der Kette 6 in die Längskanäle 5, 8 eingeführt werden können.

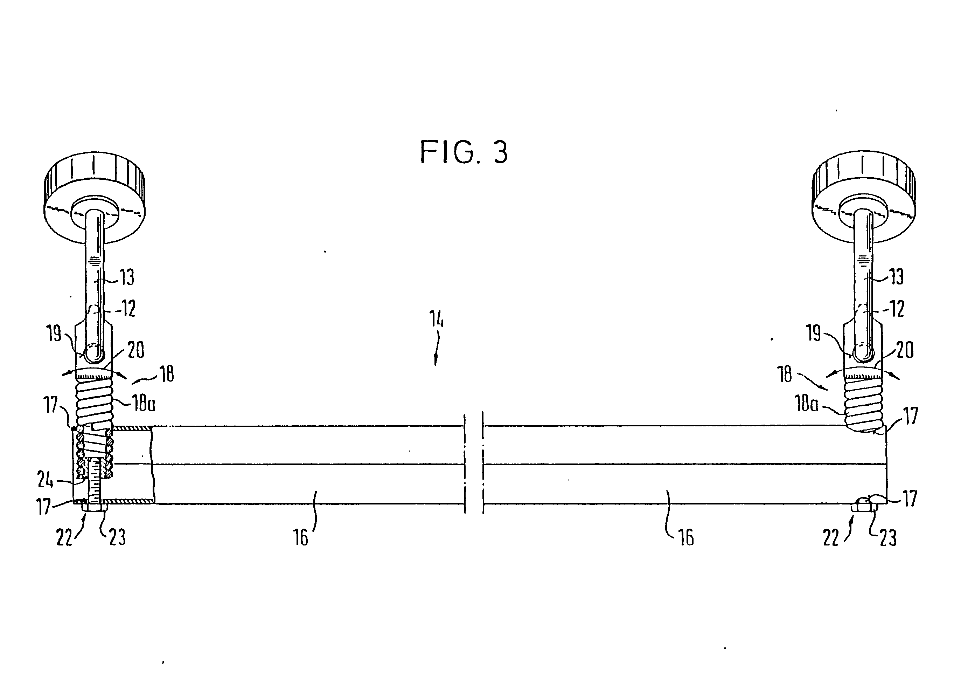

Jede Kette - ob Gall- oder Gliederkette - hat Öffnungen, in die Stifte 12 des Tragwagens 14 für die Mitnahme eingreifen sollen. Ein solcher Tragwagen 14 wird in Fig. 3 dargestellt. Er besteht aus einem horizontalen Tragsteg 16, der ein Vierkantrohr sein kann, das auf eine Kante gestellt angeordnet ist. Vorne und hinten ist je ein vertikal ausgerichtetes Loch 17 eingebracht. In jedem Loch 17 sitzt befestigt und formschlüssig vorzugsweise ein runder Mitnahmesteg 18, der den horizontalen Tragsteg 16 nach oben überragt und um seine vertikale Achse drehbar gelagert ist. Im oberen freien Endbereich des Mitnahmestegs 18 ist der Mitnahmestift 12 angeordnet. Unterhalb des Mitnahmestifts 12 ist ein Querloch 19 in den Mitnahmesteg 18 eingebracht, das vom Tragbügel 13 frei durchgriffen wird, so daß der Tragbügel 13 im Querloch 19 um eine horizontale Achse schwenkbar gelagert ist.

Wesentlich ist, daß der Mitnahmesteg 18 oberhalb des horizontalen Tragstegs 16 in Doppelpfeilrichtung 20 elastisch biegbar ist. Diese Biegbarkeit muß jedoch wiederum so biegesteif sein, daß die Mitnahmestege 18 sich starr verhalten, wenn eine normale Mitnahme erfolgt.

Treten übermäßige Biegemomente in Richtung des Doppelpfeils 20 auf, z. B. in den Biegungen der Steigstrecken oder in Krümmungen, dann sollen die Stifte sich neigen können und in die Öffnung eines anderen Kettengliedes springen können, so daß der Abstand zwischen den Mitnahmestegen 18 gleich bleibt oder nahezu gleich bleibt und die Biegemomente abgebaut oder nahezu abgebaut sind.

Um diese elastische Biegung bzw. elastische Rastung zum Abbau der Biegemomente gewährleisten zu können, kann z. B. vorgesehen sein, den Mitnahmesteg 18 zumindest im Bereich über dem Tragsteg 16 als Spiralfeder 18a auszubilden, die ausreichend biegesteif für eine normale Mitnahme ist, jedoch beim Auftreten übermäßiger Biegemomente in Richtung des Doppelpfeils 20 ausweicht und dafür sorgt, daß der Stift 12 in ein anderes Loch der Kette 6 einrastet. Dieses Überspringen von einem zum anderen Loch geschieht solange, bis die Stifte 12 biegemomentfrei oder nahezu biegemomentfrei sind. Anstelle der Spiralfeder 18 kann man entsprechende Gummistege oder Kunststoffstege oder dgl. elastische Stege vorsehen.

Für den Transport der Tragwagen in engen Kurven und Krümmungen werden entsprechend gekrümmte Kunststoffschienen 7 verwendet. Gliederketten passen sich den Krümmungen ohne weiteres an. Es gibt aber auch Gallketten, die den Krümmungen angepaßt werden können. Sie werden auf dem Markt mit Seitenbogen-Rollenketten bezeichnet.

Zur Befestigung der Spiralfeder 18a gegen Herausrutschen aus dem Loch 17 ist im dargestellten Beispiel eine Gewindehülse 24 vorgesehen, die axial im unteren Endbereich der Spiralfeder 18a festsitzt. In die Gewindehülse ist eine Schraube 22 eingeschraubt, die sich mit ihrem Kopf 23 gegen den Tragsteg 16 abstützt. Auf diese Weise wird auch gewährleistet, daß die Spiralfeder 18a um eine vertikale Achse drehbar gelagert ist.

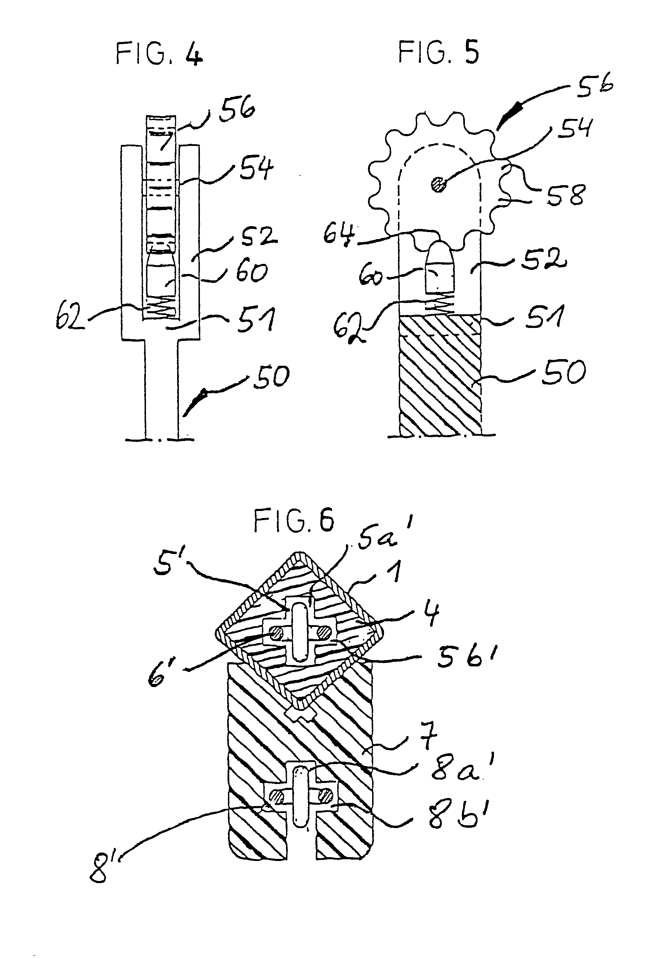

Die Fig. 4 und 5 zeigen ein weiteres Ausführungsbeispiel von Kupplungselementen für die selbsttätige Mitnahme der Tragwagen. Ähnlich wie bei dem in Fig. 1 und 2 gezeigten Ausführungsbeispiel weisen die Tragbügel einen Mitnahmesteg 50 auf, der sich oberhalb der Gabelmitte der Tragbügel, jedoch nicht in Form eines Stiftes, sondern gabelförmig fortsetzt. Die beiden, durch einen Quersteg 51 miteinander verbundenen Gabeln 52 des Mitnahmestegs sind vertikal und parallel zueinander angeordnet. In ihrem oberen Endbereich tragen sie eine sich quer erstreckende Welle 54, auf der ein Zahnrad 56 mit Zähnen 58 drehbar gelagert ist. Der Durchmesser des Zahnrads 56 ist dabei so gewählt, daß das Zahnrad 56 über das obere Ende der Gabeln 52 des Mitnahmestegs 50 hinausragt. Oberhalb des Querstegs 51 ist ein sich nach oben erstreckender Stift 60 angeordnet, der durch Wirkung einer am Quersteg befestigten Feder 62 nach oben gedrückt wird.

In der Ruhestellung befindet sich der Stift 60 mit seinem vorderen Ende in einem Einschnitt 64 zwischen zwei Zähnen 58. Einer der Zähne des Zahnrads ragt in ein Loch der Kette 6, ähnlich wie der Stift 12 beim ersten Ausführungsbeispiel. In dieser Stellung ist das Zahnrad durch den federbelasteten Stift arretiert. Treten sehr starke Biegemomente auf, so gibt der Stift infolge der Federwirkung nach und wird außer Eingriff mit dem bisherigen Einschnitt 64 gebracht. Hierdurch kann sich das Zahnrad 56 drehen, bis der nächste Zahn wieder in ein Loch der Kette 6 eingreift. In dieser Stellung wird das Zahnrad wiederum durch den Stift 60 arretiert, der im nächsten Einschnitt zur Anlage gekommen ist. Sind die Biegemomente immer noch sehr groß, gibt der Stift weiter nach, und das Zahnrad dreht sich weiter und der Tragbügel rutscht weiter, bis ein Zahn des Zahnrads biegemomentfrei oder nahezu biegemomentfrei ist.

In Fig. 6 ist eine andere Ausführungsform der Kette gezeigt, der entsprechend die Auskleidung 4 der Laufschiene 1 und die Kunststoffschiene anders geformte Längskanäle 5', 8' aufweisen. Die Kette 6' ist eine Gliederkette, deren Glieder jeweils senkrecht zu den benachbarten Gliedern und diese jeweils umgreifend angeordnet sind.

Dementsprechend besteht der Längskanal 5', 8', jeweils aus zwei sich im Zentrum kreuzenden, im Querschnitt rechteckförmigen Kanalabschnitten 5a', 5b' bzw. 8a', 8b'.

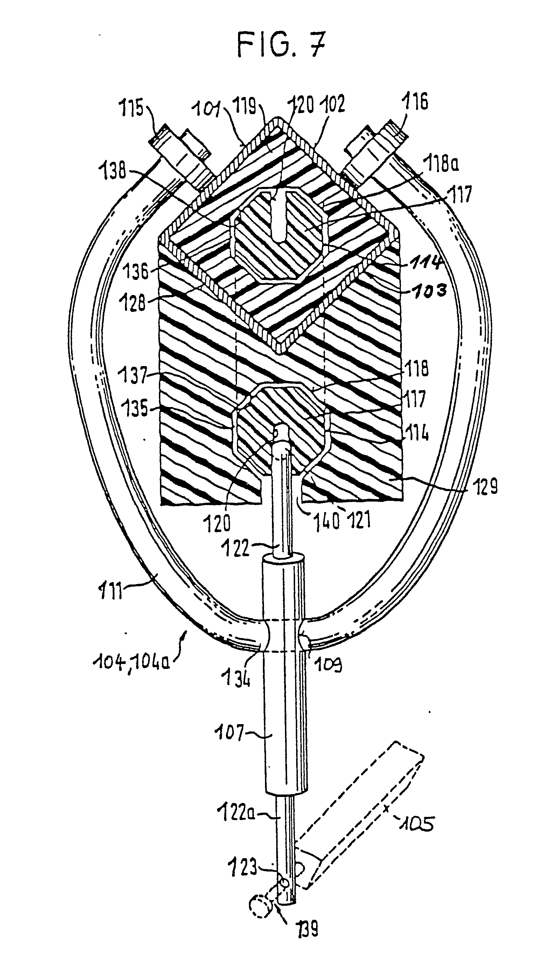

Die in Fig. 7 gezeigte Transportvorrichtung 104 besteht aus einem oben offenen Bügel 111, an dessen unterer Krümmung 134 eine mit einer Aufnahmebohrung 109 versehene vorzugsweise stabförmige Halterung als Mitnahmesteg 107 gefaßt bzw. eingehängt ist. Der Mitnahmesteg 107 endet beiderseits mit Stiften 122 und 122a, wobei der untere eine Bohrung 123 zur Montage eines zweckmäßig als Steg 105 ausgebildeten Verbindungsstücks, welches mit dem Stift 122a je eines Mitnahmestegs 107, z. B. durch Verschraubung, zweckmäßig starr befestigt wird.

Der Hohlraum der Laufschiene 103 ist mit einer Kunststoffauskleidung 119 versehen, in der ein Längskanal 136 in Gestalt einer Ausnehmung ausgespart ist, die von wenigstens drei aneinanderstoßenden Führungsflächen 138 gebildet wird.

Als Laufschiene 103 ist ein Vierkantrohr mit Laufflächen 101 und 102 vorgesehen, gegen das sich die einen oder mehrere Tragbügel 111 tragenden Laufrollen 115, 116 abstützen. An die Laufschiene 103 ist ein nach unten weisender, vorzugsweise mit einem rechteckigen Querschnitt ausgestatteter Kunststoffkörper 129 angeformt, in welchem im oberen Teil eine keilförmige Bettung 128 zur bündigen Anpassung an die vierkantförmige Laufschiene 103 herausgearbeitet oder offengehalten ist. Dieser Bauform paßt sich die Ausbiegung des oder der Tragbügel 111 an, die in Transportrichtung gesehen, Laufschiene 103 und Kunststoffkörper 129 im wesentlichen ganz umfassen. An der unteren Krümmung 134 des Tragbügels 111 ist mittels einer Aufnahmebohrung 109 der Mitnahmesteg 107 mit den in die Stifte 122, 122a auslaufenden Enden gelagert.

Der Kunststoffkörper 129 weist einen Längskanal 135 auf, so daß in paralleler Anordnung aufeinander, und zwar in querschnittsmäßig kongruenter Ausgestaltung im Kunststoffkörper 129 und in der Kunststoffauskleidung 119 eine zentrische, durchgehende Ausnehmung 135, 136 mit Führungsflächen 137, 138 zur formschlüssigen Aufnahme und zur gleitenden Lagerung des Antriebsriemens 117 vorgesehen sind. Dieser weist wiederum ein Querschnittsprofil auf, welches den gleichdimensionierten Konturen der Ausnehmungen 135, 136 angepaßt ist. Der Antriebsriemen 117 weist ferner eine Klemmnut 120 auf, die durch die parallel dazu geführte Schlitzung 140 im Kunststoffkörper 129 für das Mitnahmeelement - Stift 122 - erreichbar ist. An seinen Endbereichen läuft der Antriebsriemen 117 um ein Antriebsrad und ein Umlenk- oder ein weiteres Antriebsrad.

Der Eingriff zwischen dem Kupplungselement - Stift oder Zapfen 122 - geschieht, indem dieses mit seiner Spitze 121 in den Wirkungsbereich der ziehenden, endlosen Nut 120 gelangt und mit

7 **0 164 109** 8

dieser eine reibschlüssige Verbindung herstellt. Da der Durchmesser der Spitze 121 des aus Metall gefertigten Stifts 122 um ein geringes größer ist als die Breite der formelastischen Nut 120, wird nach Art einer Mitnahme- bzw. Rutschkupplung eine Klemmwirkung zwischen diesen Verbindungselementen hervorgerufen, welche die sanfte, lautlose Förderung eines Tragelements 104 in Gang setzt. Die Klemmwirkung ist so bemessen, daß ein unbeabsichtigtes Lösen des Stifts 121, 122 aus der Nut 120 auch bei extremer Förderlast nicht möglich ist.

Vor Erreichen der Kupplungsstelle vor einem schrägen Förderabschnitt werden normalerweise die Tragelemente 104 bzw. 104a auf einer Zuführ- oder Vorratsschiene von Hand herangebracht. Durch den Antriebsriemen 117 bzw. durch die Nut 120 wird zuerst das mit dem einen Tragbügel verbundene Kupplungselement erfaßt und in die Schrägförderung transportiert. Durch die im Startbereich notwendige Krümmung der Laufschiene nach oben, folgen die Laufrollen 115, 116 dieser Spur und der Tragbügel wird aus der normalen, lotrechten Haltung in eine Schräglage versetzt, während der nachfolgende mit den ersteren durch den Tragsteg 105 verbundene Tragbügel bis zum Erreichen der Kupplungsstelle noch in der lotrechten Lage verbleibt. Der zweite Tragbügel wird nach dem Erfassen durch den Antriebsriemen 117 ebenfalls in die Schräglage überführt, so daß die ursprüngliche Parallelität zwischen den Tragbügeln 104 bzw. 104a und zwar senkrecht oder beinahe senkrecht zur schräggeführten Laufschiene 103 wieder hergestellt ist.

Unter ähnlichen Voraussetzungen vollzieht sich ein Ausgleich beim Passieren der oberen Krümmung der Laufschiene durch die Tragwagen. Auch hier wird die Parallelität der Tragbügel für kurze Zeit zwangsläufig aufgehoben, die erst dann wieder hergestellt wird, sobald die Wagen im Endbereich beim Antriebs- oder Umlenkrad des Antriebsriemens 117 die Fördereinrichtung verlassen und z. B. auf eine weitere Vorratsschiene gelangen. Dabei lösen sich die Stifte 121/122 der Mitnahmestege 107 aus der Nut 120 beim Antriebsrad praktisch selbsttätig, da sie mit dem Antriebsriemen 117 dem Kreisbogen des Antriebsrads folgend, die Stifte 121/122 ohne weitere mechanische Einwirkung abstreift.

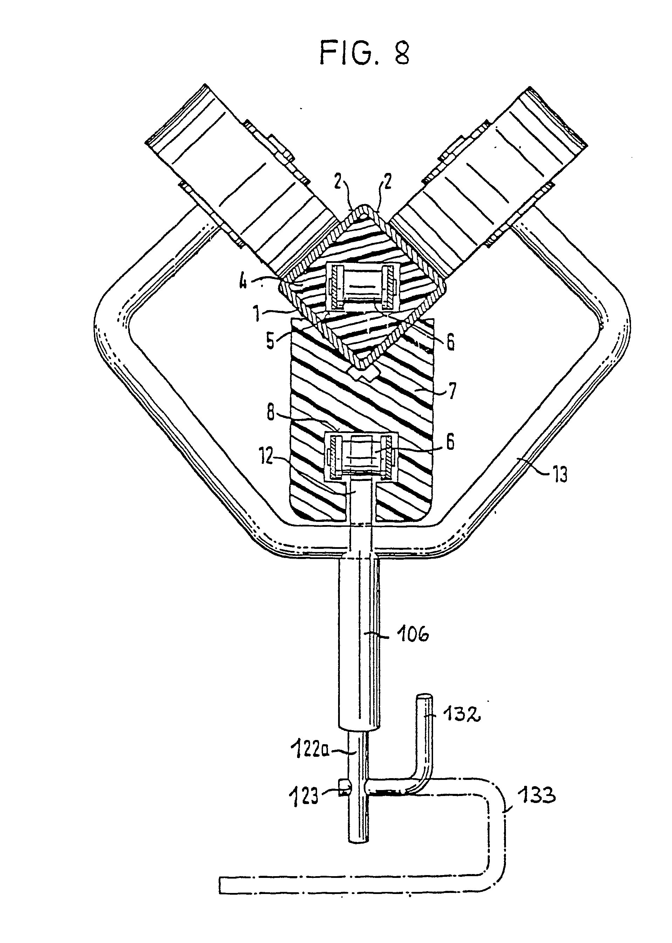

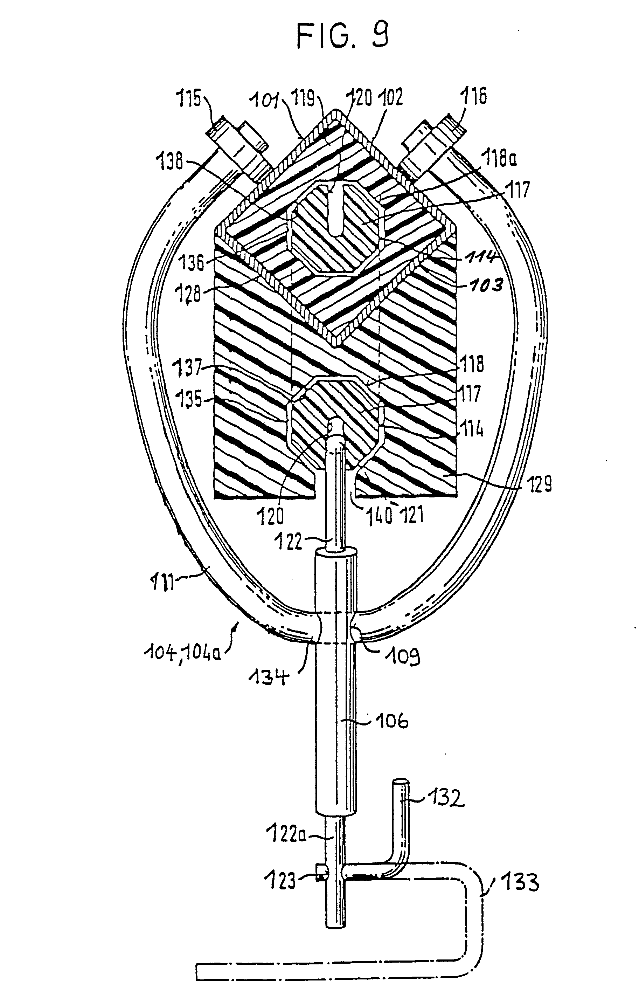

Fig. 8 und 9 zeigen zwei weitere Ausführungsbeispiele der erfindungsgemäßen Transportvorrichtung. Gleiche Teile sind mit gleichen Bezugszeichen wie in den vorhergehenden Figuren bezeichnet und werden nicht noch einmal beschrieben. Die Tragbügel 13, 111 dienen nicht zur Halterung von Tragwagen, sondern sind vielmehr selbst mit Trageinrichtungen für Fördergut ausgestattet. Der Mitnahmesteg 106 weist an seinem unteren Ende einen Stift 122a mit einem Durchgangsloch 123 auf, durch das sich ein Haken 132 oder 133 erstreckt, an dem Fördergut aufgehängt werden kann.

## Patentansprüche

1. Selbsttätige Transportvorrichtung für eine Hängefördervorrichtung, insbesondere für die innerbetriebliche Hängeförderung in der Bekleidungsindustrie, mit Laufschienen (1) und darauf verschiebbaren, die Laufschienen von unten umgreifenden Tragbügeln (13), wobei mindestens zwei Tragbügel Teile eines Tragwagens (14) sein können, und wobei zur Abstützung auf der Laufschiene (1) jeweils zwei zueinander schräggestellte Laufrollen an den Tragbügeln (13) angeordnet sind und zum selbsttätigen Transportieren der Tragbügel (13) eine endlos umlaufende Kette (6, 6') vorgesehen ist, die mit an den Tragbügeln angeordneten Kupplungselementen (18, 50) die selbsttätige Mitnahme bewirken, dadurch gekennzeichnet, daß unterhalb der Laufschiene (1) eine Kunststoffschiene (7) angeordnet ist, die einen Längskanal (8) mit einem nach unten offenen Längsschlitz (9) aufweist, wobei im Längskanal (8) formschlüssig der untere Trum der Kette (6, 6') geführt wird und daß als Kupplungselemente vertikal ausgerichtete Mitnahmestege (18, 50) vorgesehen sind, die aus ihrer Ruhelage elastisch ausweichend angeordnet sind und die im oberen freien Endbereich mit Vorsprüngen (12, 58) versehen sind, die frei durch den Längsschlitz (9) greifen und in ein Loch der Kette (6, 6') ragen.

2. Selbsttätige Transportvorrichtung nach Anspruch 1, dadurch gekennzeichnet, daß die Bügel (13) jeweils mit dem Mitnahmesteg (18) um eine horizontale Achse schwenkbar in Verbindung stehen und daß der Mitnahmesteg elastisch biegbar ausgebildet ist, wozu vorzugsweise der Mitnahmesteg (18) zumindest im elastisch biegsamen Bereich aus einer Spiralfeder besteht.

3. Selbsttätige Transportvorrichtung nach Anspruch 1, dadurch gekennzeichnet, daß der Vorsprung (58) des Mitnahmestegs (50) gegen eine elastisch nachgiebige Sperreinrichtung wirkt.

4. Selbsttätige Transportvorrichtung nach Anspruch 3, dadurch gekennzeichnet, daß die Mitnahmestege (50) jeweils an ihrem oberen Endbereich (52) ein drehbares Zahnrad (56) mit die Vorsprünge bildenden Zähnen (58) tragen, wobei das Zahnrad (56) durch die elastisch nachgiebige Sperreinrichtung (60, 62) arretiert ist.

5. Selbsttätige Transportvorrichtung nach Anspruch 4, dadurch gekennzeichnet, daß die Mitnahmestege (50) jeweils oben in zwei Gabeln (52) enden, zwischen denen das Zahnrad (56) nach oben vorstehend gelagert ist und daß die Sperreinrichtung aus einem über eine Feder (62) mit dem Quersteg (51) des Mitnahmestegs verbundenen Stift (60) besteht.

6. Selbsttätige Transportvorrichtung nach Anspruch 1 oder 2, gekennzeichnet durch einen Tragwagen (14) mit zwei Tragbügeleinrichtungen (13), wobei der Tragwagen (14) einen horizontalen Tragholm bzw. Tragsteg (16) aufweist, in dessen Endbereichen jeweils ein Loch (17) angeordnet ist, das von einer

5

Spiralfeder (18a) formschlüssig durchgriffen wird, wobei oben an der Spiralfeder (18a) der Stift (12) sitzt und die Spiralfeder (18a) bzw. der Mitnahmesteg (18) in vertikaler Richtung gesichert gelagert ist.

7. Selbsttätige Transportvorrichtung nach Anspruch 6, dadurch gekennzeichnet, daß der Mitnahmesteg (18) bzw. die Mitnahmespiralfeder (18a) um eine vertikale Achse drehbar gelagert ist.

8. Selbsttätige Transportvorrichtung nach einem oder mehreren der Ansprüche 1 bis 7, dadurch gekennzeichnet, daß die Kette (6) eine Gliederkette ist.

9. Selbsttätige Transportvorrichtung nach einem oder mehreren der Ansprüche 1 bis 8, dadurch gekennzeichnet, daß die Kette (6) eine Seitenbogen-Rollenkette ist.

10. Selbsttätige Transportvorrichtung für eine Hängefördervorrichtung, insbesondere für die innerbetriebliche Hängeförderung in der Bekleidungsindustrie, mit Laufschienen (103) und darauf verschiebbaren, die Laufschienen von unten umgreifenden Tragbügeln, (111) wobei mindestens zwei Tragbügel Teile eines Tragwagens sein können, und wobei zur Abstützung auf der Laufschiene jeweils zwei zueinander schräggestellte Laufrollen an den Tragbügeln angeordnet sind und zum selbsttätigen Transportieren der Tragbügel ein endlos umlaufendes angetriebenes Zugelement (117) vorgesehen ist, das mit an den Tragbügeln angeordneten Kupplungselementen (107) die selbsttätige Mitnahme bewirkt, dadurch gekennzeichnet, daß das Zugelement aus einem als Mehrkantprofil ausgebildeten Antriebsriemen (117) besteht, der mit einer in Längsrichtung verlaufenden Klemmnut (120) versehen ist, daß unterhalb der Laufschiene (103) eine Kunststoffschiene (129) angeordnet ist, die einen Längskanal (135) mit einem nach unten offenen Längsschlitz (140) aufweist, wobei im Längskanal (135) formschlüssig der untere Trum des Antriebsriemens (117) mit nach unten weisender Klemmnut (120) geführt ist und daß als Kupplungselement ein vertikal ausgerichteter Mitnahmesteg (107) vorgesehen ist, der im oberen freien Endbereich einen Stift (122) bildet, der sich frei durch den Längsschlitz (140) erstreckt und reibschlüssig in die Klemmnut (120) eingreift und daß die Tragbügel (111) jeweils mit dem Mitnahmesteg (107) um eine horizontale Achse schwenkbar in Verbindung stehen.

11. Selbsttätige Transportvorrichtung nach Anspruch 10, gekennzeichnet durch einen Tragwagen mit zwei Tragbügeln (111), wobei der Tragwagen einen horizontalen Tragholm bzw. Tragsteg (105) aufweist, an dessen Endbereichen nach oben ragend starr jeweils der Mitnahmesteg (107) angeordnet ist.

12. Selbsttätige Transportvorrichtung nach Anspruch 10 oder 11, dadurch gekennzeichnet, daß der Längskanal (135) aus einer durchgehenden Ausnehmung mit mehreren, in einem bestimmten Winkel aufeinanderstoßenden Führungsflächen (118, 118a bzw. 137, 138) besteht, innerhalb derer das als Gleitflächen (114) ausgeformte Überflächenprofil des Antriebsriemens (117) gleitend gelagert ist.

13. Selbsttätige Transportvorrichtung nach einem der Ansprüche 10 bis 12, dadurch gekennzeichnet, daß der Durchmesser der Spitze (121) des Stifts (122) des Mitnahmestegs (107) um ein geringes größer als die lichte Breite der Klemmnut (120) des Antriebsriemens ist.

14. Selbsttätige Transportvorrichtung nach Anspruch 13, dadurch gekennzeichnet, daß die Verbindung zwischen der Klemmnut (120) im Antriebsriemen (117) und der Spitze (121) des Stifts (122) einen formschlüssigen Klemmsitz bildet.

15. Selbsttätige Transportvorrichtung nach einem der Ansprüche 10 bis 12, dadurch gekennzeichnet, daß das Profil des Antriebsriemens (117) mit seinen Gleitflächen (114) und der Längskanal (135, 136) jeweils mindestens drei einander angepaßte Flächenelemente aufweisen.

**Claims**

1. Automatic means of transport for an overhead conveyor device, in particular for an overhead conveyor device in a factory in the clothing industry, with rails (1) and supporting stirrups (13) which engage the rails from beneath and can be displaced thereupon, wherein at least two supporting stirrups may form part of a trolley (14) and wherein two rollers which are inclined towards each other are located on the supporting stirrups (13) for support on the rail (1) and an endless cycling chain (6, 6') is provided for automatic transport of the supporting stirrups (13), automatically drawing the supporting stirrups by means of coupling members (18, 50) mounted thereupon, characterised in that a plastics rail (7) is located beneath the rail (1) and incorporates a longitudinal channel (8) with a longitudinal slot (9) opening downwards, wherein the lower length of the chain (6, 6') is passed through and is retained within the longitudinal channel (8), and in that vertically directed engaging pins (18, 50) are provided as coupling members, these being constructed to be elastically yielding from their rest position and provided with projections (12, 38) in their upper free end regions which loosely engage the longitudinal slot (9) and project into a space in the chain (6, 6').

2. Automatic means of transport according to Claim 1, characterised in that the stirrups (13) are each connected to the engaging pins (18) with the ability to swing about a horizontal axis and in that the engaging pin is constructed to be elastically yielding, wherein the engaging pin (18) preferably comprises a spiral spring at least in the elastically yielding portion.

3. Automatic means of transport according to

Claim 1 <u>characterised in that</u> the projection (58) of the engaging pin (50) acts against an elastically yielding arresting device.

4. Automatic means of transport according to Claim 3, <u>characterised in that</u> the engaging pins (50) each bear on their upper end regions (52) a rotatable toothed wheel (56) with teeth (58) forming the projections whereby the toothed wheel (56) is brought to a stop by the elastically yielding arresting device (60, 62).

5. Automatic means of transport according to Claim 4, <u>characterised in that</u> the engaging pins (50) each end upwardly in two forks (52) between which the toothed wheel (56) is mounted so as to project upwards and in that the arresting device comprises a rod (60) connected with the transverse limb (51) of the engaging pin by means of a spring (62).

6. Automatic means of transport according to Claims 1 or 2, <u>characterised by</u> means of a trolley (14) with two supporting stirrup devices (13), wherein the trolley (14) has a horizontal drawbar or drawbeam (16), in the end region of which is placed a hole (17) which is engaged by an interlocking helical spring (18a), wherein the rod (12) is mounted above the helical spring (18a) and the helical spring (18a) and the engaging pin (15) are securely mounted in the vertical direction.

7. Automatic means of transport according to Claim 6, <u>characterised in that</u> the engaging pin (15) and the engaging spiral spring (18a) are mounted so as to rotate about a vertical axis.

8. Automatic means of transport according to one or more of Claims 1 to 7, <u>characterised in that</u> the chain (6) is an open link chain.

9. Automatic means of transport according to one or more of Claims 1 to 8, <u>characterised in that</u> the chain (6) is a laterally bowed roller chain.

10. Automatic means of transport for an overhead conveyor device, in particular for an overhead conveyor device in a factory in the clothing industry, with rails (103) and supporting stirrups (111) which engage the rails from beneath and can be displaced thereupon, wherein at least two supporting stirrups may form part of a trolley and wherein two rollers which are inclined towards each other are located on the supporting stirrup for support on the rail and an endless cycling driven drawing means (117) is provided for automatic transport of the supporting stirrups, automatically drawing the supporting stirrups by means of coupling members (107) mounted thereupon, <u>characterised in that</u> the drawing member comprises a drive belt (117) constructed from a multiple edge profile which is provided with a clamping groove running in the longitudinal direction (120), in that a plastics rail (129) is located beneath the rail (103) and incorporates a longitudinal channel (135) with a downwardly open longitudal slot (140), wherein the lower length of the drive belt (117) with the downwardly directed clamping groove (120) is passed through and secured within the longitudinal channel (135) and in that a vertically directed engaging pin (107) is provided as a coupling member and forms a rod (122) in the upper free end region which extends freely through the longitudinal slot (140) and frictionally engages the clamping groove (120) and in that the supporting stirrups (111) are each connected with the engaging pin (107) and are able to swing about a horizontal axis.

11. Automatic means of transport according to Claim 10, <u>characterised by</u> a trolley with two supporting stirrups (111), wherein the trolley has a horizontal drawbar or draw pin (105) in the end region of which is located the stiffly upwardly projecting engaging pin (107).

12. Automatic means of transport according to Claim 10 or 11, <u>characterised in that</u> the longitudinal channel (135) comprises a penetrating recess with a plurality of guide surfaces which meet each other at particular angles (118, 118a and 137, 138) within which the upper surface profile of the drive belt (117) constructed as a sliding surface (114) is slidably mounted.

13. Automatic means of transport according to one of Claims 10 to 12, <u>characterised in that</u> the diameter of the tip (121) of the rod (122) of the engaging pin (107) is a little smaller than the clear width of the clamping groove (120) of the drive belt.

14. Automatic means of transport according to Claim 13, <u>characterised in that</u> the connection between the clamping groove (120) in the drive belt (117) and the tip (121) of the rod (122) forms an interlocking connection.

15. Automatic means of transport according to one of Claims 10 to 12, <u>characterised in that</u> the profile of the drive belt (117) with its sliding surfaces (114) and of the longitudinal channel (135, 136) each include at least three surface units which match each other.

**Revendications**

1. Dispositif de transport automatique pour un système de convoyeur aérien, en particulier, pour le convoyage aérien intérieur dans l'industrie du vêtement, comprenant des rails de roulement (1) et des étriers de support (13) translatables sur lesdits rails de roulement et les saisissant par le dessous, au moins deux étriers de support pouvant faire partie d'un chariot de support (14), deux roues inclinées l'une par rapport à l'autre étant agencées sur chacun des étriers de support (13) pour prendre appui sur le rail de roulement et une chaîne (6, 6') entraînée à circulation sans fin étant prévue pour le transport automatique des étriers de support (13), laquelle chaîne provoque l'accrochage automatique avec des éléments de couplage (18, 50) agencés sur les étriers de support, caractérisé en ce qu'un rail synthétique (7) est disposé sous le rail de roulement (1), lequel rail synthétique (7) comporte un canal longitudinal (8) ouvert vers le bas par une fente longitudinale (9), le chemin inférieur de la chaîne (6, 6') étant guidé mécaniquement dans le canal longitudinal (8) et en ce que des barrettes d'accrochage (18, 50) dirigées selon la verticale sont prévues comme éléments de couplage, qui sont agencées de façon à se déporter élastiquement de leur position de repos et qui sont munies à leur zone d'extrémité libre de saillies (12, 58) qui passent librement à travers la fente longitudinale (9) et pénètrent dans un trou de la chaîne (6, 6').

2. Dispositif de transport automatique selon la revendication 1, caractérisé en ce que chaque étrier (13) est relié à la barrette d'accrochage (18) de façon à pouvoir pivoter autour d'un axe horizontal et en ce que la barrette d'accrochage est conformée de façon à être pliable élastiquement, la barrette d'accrochage (18) comportant avantageusement au moins dans la zone pliable élastiquement d'un ressort à spirale.

3. Dispositif de transport automatique selon la revendication 1, caractérisé en ce que la saillie (58) de la barrette d'accrochage (50) agit contre un dispositif d'arrêt élastiquement souple.

4. Dispositif de transport automatique selon la revendication 3, caractérisé en ce que chaque barrette d'accrochage (50) porte dans sa zone d'extrémité supérieure une roue dentée (56) pivotante dont les dents (58) forment les saillies, la roue dentée (56) étant arrêtée par le dispositif d'arrêt (60, 62) souple élastiquement.

5. Dispositif de transport automatique selon la revendication 4, caractérisé en ce que chaque barrette d'accrochage (50) se termine vers le haut par une fourche à deux dents (52), entre lesquelles la roue dentée (56) est logée et dont elle fait saillie, et en ce que le dispositif d'arrêt se compose d'une tige reliée par l'intermédiaire d'un ressort (62) à l'entretoise transversale (51) de la barrette d'accrochage.

6. Dispositif de transport automatique selon la revendication 1 ou 2, caractérisé par un chariot de support (14) muni de deux dispositifs d'étrier de support (13), le chariot de support (14) comportant une entretoise de support ou une barrette de support horizontale (16) aux extrémités desquelles est percé un trou (17) qui est traversé mécaniquement par un ressort à spirale (18a), la tige (12) reposant au-dessus du ressort à spirale (18a) et le ressort à spirale (18a) ou la barrette d'accrochage (18) étant disposée selon une direction verticale.

7. Dispositif de transport automatique selon la revendication 6, caractérisé en ce que la barrette d'accrochage (18) ou le ressort à spirale d'accrochage (18a) est logé de façon à pouvoir tourner autour d'un axe vertical.

8. Dispositif de transport automatique selon une des revendications 1 à 7, caractérisé en ce que la chaîne (6) est une chaîne à maillons.

9. Dispositif de transport automatique selon une des revendications 1 à 8, caractérisé en ce que la chaîne (6) est une chaîne à rouleaux à cintre latéral.

10. Dispositif de transport automatique pour un système de convoyeur aérien, en particulier, pour le convoyage aérien intérieur dans l'industrie du vêtement, comprenant des rails de roulement (103) et des étriers de support (111) translatables sur lesdits rails de roulement et les saisissant par le dessous, au moins deux étriers de support pouvant faire partie d'un chariot de support, deux roues inclinées l'une par rapport à l'autre étant agencées sur chacun des étriers de support pour prendre appui sur le rail de roulement et un élément tracteur (117) entraîné à circulation sans fin étant prévu pour le transport automatique des étriers de support, lequel élément tracteur provoque l'accrochage automatique avec des éléments de couplage (107) agencés sur les étriers de support, caractérisé en ce que l'élément tracteur se compose d'une courroie d'entraînement (117) conformée de façon à avoir un profil à arêtes multiples, qui est munie d'une rainure de coinçage (120) s'étendant dans une direction longitudinale, en ce que un rail synthétique (129) est disposé sous le rail de roulement (103), lequel rail synthétique comporte un canal longitudinal (135) muni d'une fente longitudinale (140) ouverte vers le bas, le chemin inférieur de la courroie d'entraînement (117) comprenant la rainure de coinçage (120) ouverte vers le bas étant guidée mécaniquement dans le canal longitudinal (135) et en ce que, comme élément de couplage, une barrette d'accrochage (107) dirigée verticalement est prévue, laquelle forme dans sa zone d'extrémité libre une tige (122) qui s'étend librement à travers la fente longitudinale (140) et pénètre avec friction dans la rainure de coinçage (120), et en ce que chaque étrier de support (111) est relié de façon à pivoter autour d'un axe horizontal à la barrette d'accrochage (107).

11. Dispositif de transport automatique selon la revendication 10, caractérisé par un chariot de support muni de deux étriers de support (111), le chariot de support comportant une tige de support ou une barrette de support horizontale (105), à une zone d'extrémité de laquelle la barrette d'accrochage (107) est disposée et se dresse rigidement vers le haut.

12. Dispositif de transport automatique selon la revendication 10 ou 11, caractérisé en ce que le canal longitudinal (135) se compose d'une cavité continue munie de plusieurs surfaces de guidage (118, 118a ou 137, 138) s'intersectant selon un angle déterminé, cavité à l'intérieur de laquelle le profil de surface supérieur de la courroie d'entraînement (117) conformé comme des surfaces de glissement (114) est logé pour glisser.

13. Dispositif de transport automatique selon une des revendications 10 à 12, caractérisé en ce que le diamètre de la pointe (121) de la tige (122) de la barrette d'accrochage (107) est légèrement plus grand que la largeur de la rainure de coinçage (121) de la courroie d'entraînement.

14. Dispositif de transport automatique selon la revendication 13, caractérisé en ce que la liaison entre la rainure de coinçage (120) située dans la courroie d'entraînement (117) et la pointe (121) de la tige (122) constitue un coinçage mécanique.

15. Dispositif de transport automatique selon une des revendications 10 à 12, caractérisé en ce que le profil de la courroie d'entraînement (117) avec ses surfaces de glissement (114) et le profil du canal longitudinal (135, 136) comportent au moins trois éléments de surface se correspondant l'un à l'autre.

# FIG. 1

FIG. 2

0 164 109

FIG. 3

FIG. 4

FIG. 5

FIG. 6

# FIG. 7

# FIG. 8

# FIG. 9